# EUROPEAN PATENT SPECIFICATION

(11) **EP 2 950 469 B1**
(45) Date of publication and mention of the grant of the patent: **17.10.2018**
(21) Application number: 15169800.8
(22) Date of filing: 29.05.2015
(51) Int. Cl.: H04B 17/318, H04W 52/36

(54) **DETERMINING AND CONTROLLING RADIATION EXPOSURE**
BESTIMMUNG UND STEUERUNG DER STRAHLENEXPOSITION
DÉTERMINATION ET CONTRÔLE DE L'EXPOSITION À UN RAYONNEMENT

(30) Priority: 30.05.2014 FI 20145497
(43) Date of publication of application: 02.12.2015
(73) Proprietor: Cellraid Ltd, 90100 Oulu (FI)
(72) Inventor: Niemi, Pasi, 90100 Oulu (FI); Kankaala, Markku, 90100 Oulu (FI)
(74) Representative: Kolster Oy Ab

(56) References cited:
- EP-A1- 2 410 661
- US-A1- 2010 203 862
- US-A1- 2013 178 240

## Description

### Field of the invention

The exemplary and non-limiting embodiments of the invention relate generally to wireless communication systems. Embodiments of the invention relate especially to apparatuses, methods, and computer program products in determining and controlling radiation exposure in wireless communication systems.

### Background of the invention

The use of mobile communication devices has increased in recent decades. At first mobile phones were used extensively for making voice calls. As technology has developed and made high bandwidth data communication possible, the use of mobile devices for data transfer has increased to such extent that mobile data transfer may be even more common than voice calls. The use of modern data services, including email and social media, often require almost continuous connection to networks. The users of user terminals may have enabled the user terminals to connect to network on their own without active user intervention.

The mobile communication devices communicate with communications networks using radio frequency transmissions. The effect of electromagnetic radio frequency radiation on users has been studied in recent years but no conclusive results on the harmful effects have yet been discovered. All radio communication devices must fulfil government issued safety criteria regarding radiation properties. However, users of the devices may want to monitor radiation exposure themselves. US2013/178240, EP2410661 and US2010/203862 disclose solutions for determining radiation power level of terminals.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided an apparatus as claimed in claim 1.

According to an aspect of the present invention, there is provided a method as claimed in claim 7.

According to an aspect of the present invention, there is provided a computer program product as claimed in claim 8.

### List of drawings

In the following the invention will be described in greater detail by means of preferred embodiments with reference to the accompanying drawings, in which
Figure 1 illustrates a simplified view of a communication environment;
Figures 2 and 3 are flowcharts illustrating embodiments of the invention;
Figure 4 illustrates an example of showing determined cumulative estimates of the amount of radiation experienced by a user;
Figure 5 is a flowchart illustrating the determination of at least one radiation optimization level;
Figure 6 illustrates an example of the different optimization levels; and
Figure 7 illustrates an example of an apparatus in which embodiments of the invention may be applied.

### Detailed description of the invention

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain also features, structures, units, modules etc. that have not been specifically mentioned.

The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, embodiments.

Many different radio protocols to be used in communications systems exist. Some examples of different communication systems are the Global System for Mobile Communications (GSM, also denoted as 2G), the universal mobile telecommunications system (UMTS, also denoted as 3G) radio access network (UTRAN or E-UTRAN), long term evolution (LTE®, known also as E-UTRA), long term evolution advanced (LTE-A®, also referred to as 4G), Wireless Local Area Network (WLAN, WiFi) based on IEEE 802.11 stardard, worldwide interoperability for microwave access (WiMAX), Bluetooth®, personal communications services (PCS) and systems using ultra-wideband (UWB) technology. IEEE refers to the Institute of Electrical and Electronics Engineers. LTE and LTE-A are developed by the Third Generation Partnership Project 3GPP.

Embodiments of the invention are applicable to apparatuses in communication system or any combination of different communication systems that support required functionalities.

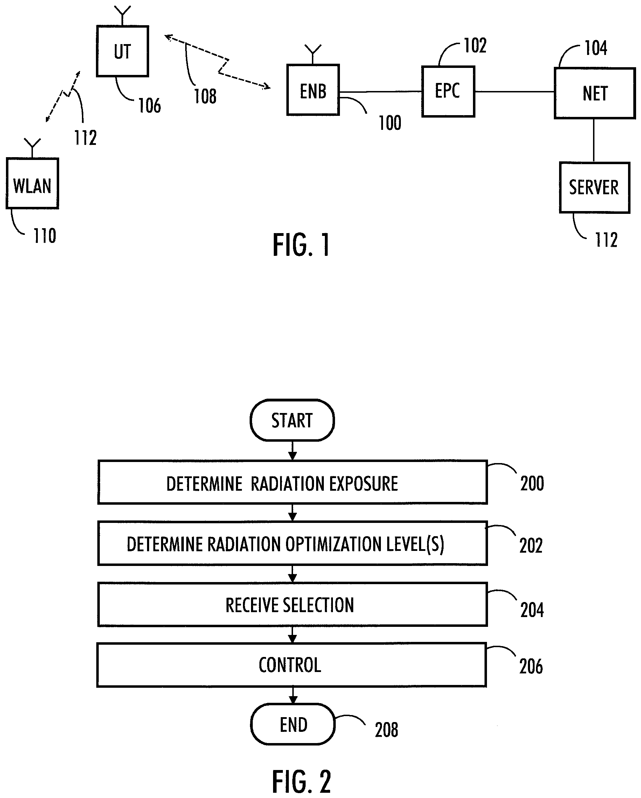

Figure 1 illustrates an example of an access architecture based on a long term evolution advanced (LTE Advanced, LTE-A) system. The LTE-A system is one example of a system where embodiments of the invention may be applied.

Figure 1 illustrates a simplified view of a communication environment only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for communication are irrelevant to the actual invention. Therefore, they need not to be discussed in more detail here.

Figure 1 shows an eNodeB 100 connected to an Evolved Packet Core EPC 102 of a communication system. The eNodeB's form a part of the radio access network (RAN) of the communication system.

The eNodeB 100, that may also be called a base station of the radio system may host the functions for Radio Resource Management: Radio Bearer Control, Radio Admission Control, Connection Mobility Control, Dynamic Resource Allocation (scheduling). Depending on the system, the counterpart on the EPC side can be a serving gateway (S-GW, routing and forwarding user data packets), packet data network gateway (P-GW, for providing connectivity of user devices (UEs) to external packet data networks), and/or mobile management entity (MME), etc. The MME (not shown) is responsible for the overall user terminal control in mobility, session/call and state management with assistance of the eNodeBs through which the user terminals may connect to the network.

The communication system is also able to communicate with other networks, such as a public switched telephone network or the Internet 104. It should be appreciated that eNodeBs or their functionalities may be implemented by using any node, host, server or access point etc. entity suitable for such a usage.

The user terminal UT 106 (also called user device, user equipment, terminal device, etc.) illustrates one type of an apparatus which communicates 108 with the communication network. The communication may comprise both voice calls and data traffic, such as a data connection to a network server 112, for example.

The user terminal typically refers to a portable computing device that includes wireless mobile communication devices operating with or without a subscriber identification module (SIM), including, but not limited to, the following types of devices: a mobile station (mobile phone), smartphone and personal digital assistant (PDA), for example.

The user terminal is configured to perform one or more of user equipment functionalities. The device may also be called a subscriber unit, mobile station, remote terminal, access terminal, user equipment (UE) just to mention but a few names or apparatuses.

Further, although the apparatuses have been depicted as single entities, different units, processors and/or memory units (not all shown in Figure 1) may be implemented

The user terminal 106 may be in radio connection with one or more external transceivers. One type of the external transceiver is the eNodeB 100. In addition to the eNodeB 100, the user terminal 106 may be in connection with one or more wireless network base stations or nodes 110. The base stations 110 may be WLAN or WiFi base stations or routers, for example. In addition, the user terminal may have a Bluetooth connection with another device.

The radio connections between user terminals and base stations or eNodeBs utilise various frequency bands which are standardised and controlled by international treaties and local authorities. For example, GSM systems typically utilise 450, 900 and 1800 MHz frequency bands, UMTS systems typically utilise 800, 1900 and 2100 MHz frequency bands and WLAN or WiFi typically utilise various frequency bands between 2,4 GHz and 5,9 GHz. The mentioned frequency bands are merely illustrative examples as also other frequency bands may be used by the systems in different countries.

Effects of the electromagnetic radiation on users caused by mobile communication devices have been studied since wireless communications systems have been taken into use. The transmitted power levels of the communication devices vary according to propagation effects and the distances between the transceivers. A user terminal situated at a border of the service area of a base station may transmit using considerably greater transmit power compared to a user terminal situated close to the base station. To ensure that health hazards are avoided governments have issued certain limits to the allowed transmit powers of both user terminals and base stations. User terminals are manufactured and communication systems are designed taking these limitations into account.

However, users of the user terminals may want to monitor themselves the radiation exposure they receive from the use of the user terminals. An embodiment of the invention provides an apparatus configured to determine the radiation experienced by a user of a user terminal of a wireless communication system.

Figure 2 is a flowchart illustrating an embodiment of the invention.

In step 200, the apparatus is configured to determine and store information on electromagnetic radiation the user of the user terminal is exposed to over a predetermined time period when using the user terminal. In addition, the location of the user terminal, connection status of the user terminal and time instants of determination may be associated and stored with the determined results.

Examples how the information on electromagnetic radiation is determined will be given below. The connection status may comprise information whether the terminal is in an on-going voice call or performing data transfer via a given type of cellular connection or via a wireless local area network, for example.

After the predetermined time period has expired, the apparatus is configured to determine in step 202 at least one radiation optimization level on the basis of determined and associated information. The apparatus may be configured to analyse the determined radiation exposure information and determine one or more radiation optimization levels and estimates of expected amounts of radiation for each level. The at least radiation optimization level comprises actions the apparatus may take to reduce the amount of radiation the user of the user terminal is exposed to. For example, it may be determined that the user is exposed to radiation at given location or using a given cellular connection type (2G, 3G, 4G, for example). In such cases the actions taken in a radiation optimization level might comprise reducing data traffic when the user terminal is at the determined location or connected to a network using the given cellular connection type.

In step 204, the apparatus is configured to receive a user selection of a radiation optimization level. The user may be presented the at least one radiation optimization level with the estimated amount of radiation for each level and the estimated amount of radiation if no radiation optimization level is selected.

In step 206, the apparatus is configured to control voice call and data transfer capabilities of the user terminal on the basis of the selected radiation optimization level.

The embodiment ends in step 208.

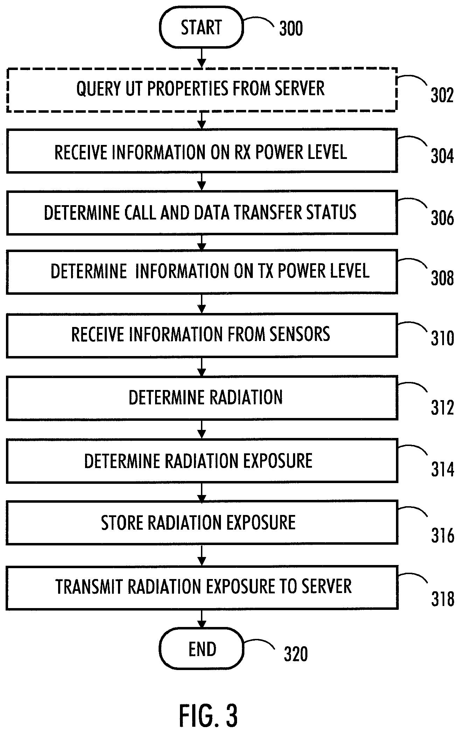

Figure 3 is a flowchart illustrating an example embodiment. The example illustrates how the apparatus of Figure 2 may perform step 200 in more detail. In an embodiment, the apparatus may be the user terminal or a part of a user terminal running suitable software configured to control the execution of following steps. The example starts at step 300.

In step 302, the apparatus is configured to determine the model of the user terminal, transmit a query to a network server regarding the properties of the user terminal and receive from the server information on the properties of the user terminal. The information may comprise the specific absorption rate (SAR) value of the user terminal.

The SAR value is used as measure of the rate at which energy is absorbed by a human body when exposed to a electromagnetic field caused by radio communication. Each user terminal type is tested and a SAR value for each type of user terminal is published. In an embodiment, a network server is configured to store SAR values of different types of user terminals. A user terminal may transmit a query to the server, the query comprising the type of the user terminal and receive as a response the SAR value of the user terminal type.

This step may be performed once or at given time intervals. The step is optional as the user of the apparatus might as well type the SAR value manually.

In step 304, the apparatus is configured to receive information on the power level of signals at least one radio transceiver of a user terminal has received from one or more external transmitters. In an embodiment, the controller of the apparatus may query from the radio modem or radio modems of the transceiver of the user terminal the strength of the signal or signals received from base stations or eNodeB's the user terminal is connected to.

In step 306, the apparatus is configured to determine information on the call connection and data transfer status of the user terminal. The apparatus may determine whether there is a voice call and/or data transfer presently on-going.

In step 308, the apparatus is configured to determine information on the power level of the signals transmitted by at least one radio transceiver of the user terminal. In an embodiment, the controller of the apparatus is configured to determine the information based on measurements made from the outputs of the radio modem or modems of the transceiver of the user terminal. In an embodiment, the controller of the apparatus is configured to estimate the information based on the power level of the signals received by the user terminal and information on the system the user terminal is communicating with and the user terminal propertied. The call connection and data transfer status may be taken into account.

In step 310, the apparatus is configured to receive information from one or more sensors of the user terminal. Examples of the one or more sensors of the user terminal comprise proximity, acceleration, location and temperature sensors. The use of sensors is explained further below.

In step 312, the apparatus is configured to determine an estimate for the amount of electromagnetic radiation on the basis on the received and determined information and the properties of the user terminal. The SAR value of the user terminal may be utilised in the determination. In an embodiment, the determined amount electromagnetic radiation may comprise information on the radiation originating from the external transmitter and the radio transceiver of the user terminal. Thus, powers of both the received and transmitted signal may be taken into account.

In step 314, the apparatus is configured to determine an estimate for the user radiation exposure. In an embodiment, the information received from the sensors may be utilised in determining the estimate for the user radiation exposure on the basis of estimate for the amount of electromagnetic radiation. The sensors may be used to determine where the user terminal is located in relation to the user of the terminal. If the sensors indicate that the terminal is located away from the user it may be determined that the amount of radiation the user is exposed to is small compared to the amount of electromagnetic radiation. This is due to the attenuation due to distance. This may be the case when there is an on-going data transfer but the proximity and acceleration sensors indicate that the terminal is stable, for example on a table. The sensors may also indicate that the user terminal is in a pocket, for example. If the user terminal is held by the ear of the user, as may be the case when there is an on-going call and no hands-free equipment is in use, the amount of radiation is greater as the distance between the user terminal antenna and user is shorter.

The location sensor may comprise a satellite location receiver such as GPS (Global Positioning System) or Glonass, for example. The location of the user terminal may be determined and stored in connection with the amount of electromagnetic radiation experienced by the user.

In step 316, the apparatus is configured to store the determined amount of electromagnetic radiation experienced by the user in memory. In addition, the apparatus may determine and store the time instant of the determination. The location of the terminal and identification of the user terminal may be stored as well. In an embodiment, the user terminal identification comprises the International Mobile Equipment Identity (IMEI) and the type of the user terminal.

In an embodiment, information on the sources of the radiation exposure may be determined and stored as well. For example, exposure due to base station radiation, local area networks, voice calls, or data traffic using different connection types may be determined and stored.

The determined amount of electromagnetic radiation experienced by the user may be shown on the display of the apparatus. In addition, the apparatus may display cumulative radiation values. The displaying of the radiation values may be a user selectable option.

In step 318, the apparatus is configured to control the transmission of the information on the determined amount to a network server. The user terminal identification, location of the terminal and time instant of the determination may be transmitted to a network server as well. The storing of the radiation values to a network server may be a user selectable option. In an embodiment, the user terminal identification comprises the International Mobile Equipment Identity (IMEI) and the type of the user terminal.

The embodiment ends in step 320.

In an embodiment, instead or addition to instantaneous estimates of the amount of radiation experienced by the user, the apparatus may be configured to gather cumulative values for the amount of radiation experienced by the user and store the cumulative values. For instance, cumulative values related to the amount of radiation experienced each hour, day, week or month may be determined, stored and displayed.

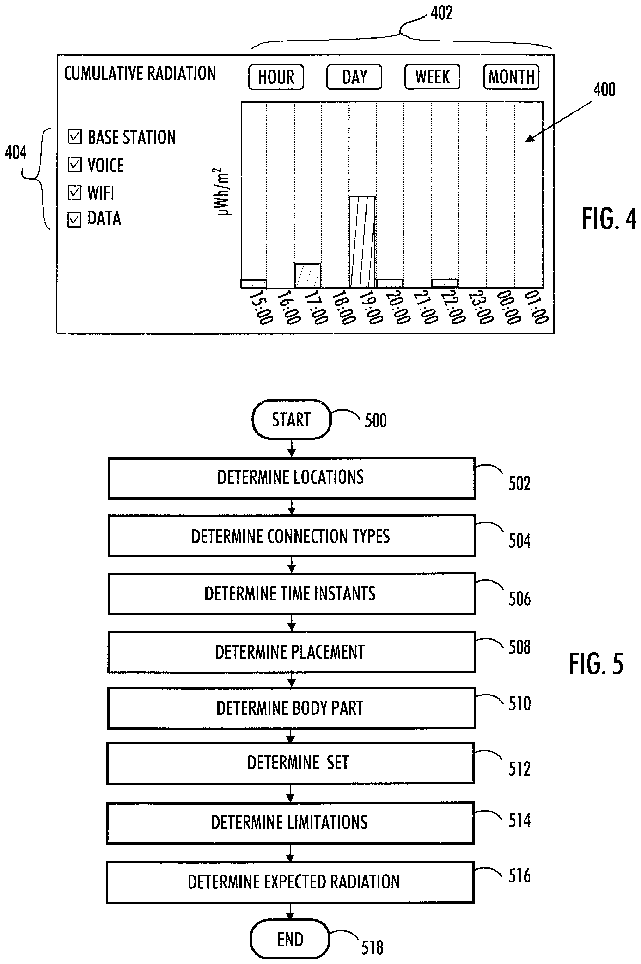

Figure 4 illustrates an example how the apparatus may be configured to display the determined cumulative estimates of the amount of radiation experienced by a user. The display of the apparatus may be controlled to show estimates of the radiation as a block diagram 400, for example. Each block denotes cumulative exposure to radiation on a given time interval. The time interval may be selected by pressing buttons 402. The sources of the radiation exposure may be selected 404. In an embodiment, only the radiation exposure of the selected sources is shown. In an embodiment, different sources may be shown with different colours or shadings in the block diagram.

In the example situation of Figure 4, hourly radiation exposure of the user is shown. It may be seen that radiation exposure has occurred especially between 19:00 and 20:00.

Figure 5 illustrates an embodiment. Figure 5 is a flowchart illustrating the determination of at least one radiation optimization level on the basis of determined and associated information. The example starts at step 500.

In step 502, the apparatus may be configured to determine locations where the user of the user terminal is exposed to electromagnetic radiation.

In step 504, the apparatus may be configured to determine connections types used when the user of the user terminal is exposed to electromagnetic radiation.

In step 506, the apparatus may be configured to determine times of day or time instants when the user of the user terminal is exposed to electromagnetic radiation.

In step 508, the apparatus may be configured to determine placement where the user terminal is when generating electromagnetic radiation. This may be performed using sensors of the user terminal. It may be detected whether the user terminal is on a table of in a pocket, for example.

In step 510, the apparatus may be configured to determine the body part of the user of the user terminal exposed to electromagnetic radiation. For example, it may be determined whether the head, body or hand of the user is exposed to electromagnetic radiation

In step 512, the apparatus is configured to determine a set of determined locations, connection types, times of days, placement or body part or combinations of these as a criterion to limit radiation. The apparatus is configured to analyse the data obtained in steps 502, 504, 506, 508 and 510 to determine the situations where and how the user is exposed to radiation.

For example, it may be determined that the user is exposed to radiation at given location. Or it may be determined that high radiation exposure occurs at a given location using a given connection types (2G, 3G, 4G, for example) or at a given time instants. The apparatus may determine that the radiation exposure is mainly due to a certain type of terminal use, for example data traffic.

In step 510, the apparatus is configured to determine a set of limitations to voice call and/or data transfer capabilities of the user terminal on the basis of data obtained in step 512. For example, the apparatus may determine that reducing data traffic when the user terminal is at the determined location or connected to a network using the given cellular connection type is advantageous in reducing radiation exposure.

In an embodiment, different optimization levels may have different criterion to limit radiation and thus they propose different limitations. The apparatus may be configured to generate a number of different optimization levels each leading to different level of reduction per time unit in the amount of radiation experienced by the user of the user terminal compared to non-limited use of the user terminal. The optimization level leading to largest reduction in radiation exposure typically comprises more limitations to the usage of the user terminal compared to en optimization level leading to lesser amount of reduction in radiation exposure.

In step 512, the apparatus is configured to determine an estimate for the amount of radiation experienced by the user of the user terminal for each of the determined optimization level.

The embodiment ends in step 514.

The determined optimization levels and the estimated radiation exposure for each level may be shown to the user as step 204 of Figure 2 illustrates.

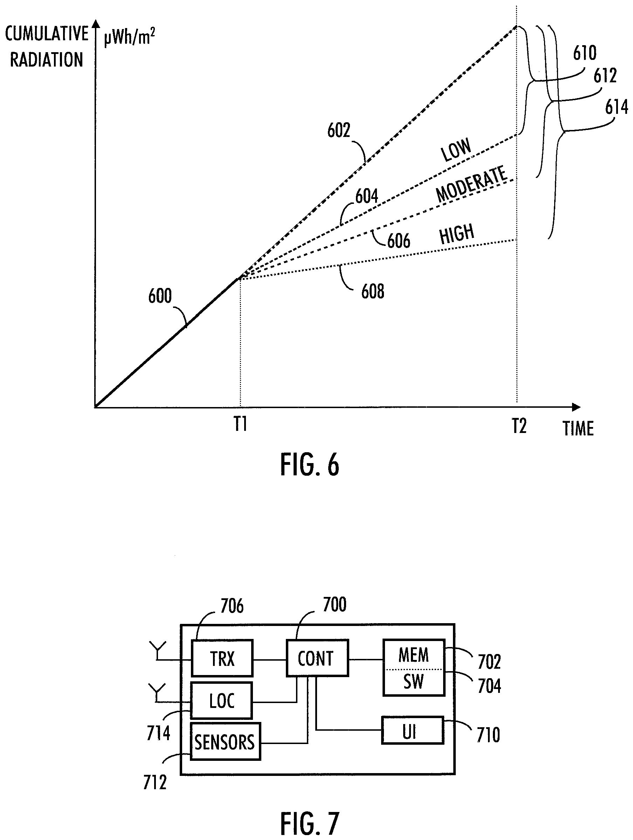

Figure 6 illustrates an example of the different optimization levels. The x-axis denotes time and y-axis denoted cumulative radiation. In an embodiment, when the operation is started, the apparatus is configured to determine and store information on electromagnetic radiation the user of the user terminal is exposed to over a predetermined time period when using the user terminal, the location of the user terminal, connection status of the user terminal and time instants of determination. In this example, the apparatus collects radiation exposure data until time instant T1 is reached. The amount of radiation 600 increases a function of time.

At time instant T1, the apparatus is configured to determine a number of radiation optimization levels on the basis of determined information. In this example three different optimization levels are determined. Each optimization level has a different criterion for reducing radiation exposure. Each level thus utilises different limitations of user terminal use and leads to different radiation exposure. In this example, the three levels are denoted as "low" 604, "moderate" 606 and "high" 608 depending on the amount of reduction in the radiation received by the user if the optimization level were selected.

In an embodiment, expected radiation exposure values of the different optimization levels are determined for a future time instant T2. Also expected radiation exposure values for non-optimized situation 602 may be determined. T2 may be predetermined (a few weeks or months, for instance) or it may be a user selectable value.

The user may be presented the expected radiation exposure 602 if no optimizations were used, and expected radiation exposures 604, 606, 608 if the optimization levels were to be applied. The "low" optimization level proposes least limitations to the use of the user terminal and leads to a radiation exposure value which is smaller 610 than the value expected if no optimizations 602 were used. The "high" optimization level proposes the most limitations to the use of the user terminal and leads to a radiation exposure value having the largest reduction 614 compared to the value expected if no optimizations 602 were used. The "moderate" optimization level leads to a reduction 612 which is between these two alternatives.

Figure 7 illustrates an embodiment. The figure illustrates a simplified example of an apparatus in which embodiments of the invention may be applied. In some embodiments, the apparatus is a user terminal or a part of a user terminal.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 700 configured to control at least part of the operation of the apparatus. The control circuitry 700 is configured to execute one or more applications.

The apparatus may comprise a memory 702 for storing data and/or applications. Furthermore the memory may store software 704 executable by the control circuitry 700. The memory may be integrated in the control circuitry.

The apparatus may comprise a communication interface 706. The communication interface is operationally connected to the control circuitry 700. The communication interface may comprise a transceiver which enables the apparatus to communicate with other apparatuses and be in connection with the internet, for example. The communication interface may comprise several radio units enabling the apparatus to utilise for communication a cellular network such as LTE, LTE-A, UMTS, or a wireless network (WLAN, WiFi, WiMAX).

The software 704 may comprise a computer program comprising program code means adapted to cause the control circuitry 700 of the apparatus to control and communicate with the communication interface 706.

The apparatus may further comprise user interface 710 operationally connected to the control circuitry 700. The interface may comprise a (touch sensitive) display, a keypad, a microphone, and a speaker, for example.

The apparatus may further comprise sensors 712. The sensors may comprise proximity, acceleration, location and temperature sensors, for example. The location sensor also may be realized with a satellite positioning receiver 714 which enables the controller to determine the location of the apparatus.

In an embodiment, the applications may cause the apparatus to determine and store information on electromagnetic radiation the user of the user terminal is exposed to over a predetermined time period when using the user terminal, the location of the user terminal, connection status of the user terminal and time instants of determination; determine at least one radiation optimization level on the basis of determined information when the predetermined time period has expired; receive user selection of a radiation optimization level; and control voice call and data transfer capabilities of the user terminal on the basis of the selected radiation optimization level.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or control circuitries able to perform the above-described steps may be implemented as an electronic digital computer, or a circuitry which may comprise a working memory (RAM), a central processing unit (CPU), and a system clock. The CPU may comprise a set of registers, an arithmetic logic unit, and a controller. The controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, the apparatus may comprise means for determining and storing information on electromagnetic radiation the user of the user terminal is exposed to over a predetermined time period when using the user terminal, the location of the user terminal, connection status of the user terminal and time instants of determination; means for determining at least one radiation optimization level on the basis of determined information when the predetermined time period has expired; means for receiving user selection of a radiation optimization level; and means for controlling voice call and data transfer capabilities of the user terminal on the basis of the selected radiation optimization level.

It will be obvious to a person skilled in the art that, as the technology advances, the inventive concept can be implemented in various ways. The invention and its embodiments are not limited to the examples described above but may vary within the scope of the claims.

## Claims

1. An apparatus, comprising:
at least one processor; and
at least one memory including computer program code,
the at least one memory and the computer program code configured to, with the at least one processor, cause the apparatus at least to:
determine (200) and store information on electromagnetic radiation a user of a user terminal is exposed to over a predetermined time period when using the user terminal, a location of the user terminal, connection status of the user terminal and time instants of determination;
**characterised in that** the at least one memory and the computer program code configured to, with the at least one processor, cause the apparatus further to: determine (202) at least one radiation optimization level on the basis of determined information when the predetermined time period has expired;
receive (204) user selection of a radiation optimization level; and
control (206) voice call and data transfer capabilities of the user terminal on the basis of the selected radiation optimization level, wherein the apparatus is caused to determine a radiation optimization level on the basis of determined information further comprises to cause the apparatus further to:
determine locations where the user of the user terminal is exposed to electromagnetic radiation;
determine placement where the user terminal is when generating electromagnetic radiation;
determine connections types used when the user of the user terminal is exposed to electromagnetic radiation;
determine time instants when the user of the user terminal is exposed to electromagnetic radiation;
determine the body part of the user of the user terminal exposed to electromagnetic radiation;
select a set of the above determined items or combinations of these as a criterion to limit radiation;
select a set of limitations to voice call and/or data transfer capabilities of the user terminal,
determine an estimate for the amount of radiation experienced by the user of the user terminal if the selected limitations were applied when a criterion fulfils.

2. The apparatus of claim 1, the at least one memory and the computer program code configured to, with the at least one processor, cause the apparatus further to:
receive information on the power level of signals at least one radio transceiver of a user terminal has received from one or more external transmitters;
determine information on the power level of the signals transmitted by the at least one radio transceiver of the user terminal;
determine information on the call connection and data transfer status of the user terminal:
receive information from one or more sensors of the user terminal;
determine the amount of electromagnetic radiation the user of the user terminal is exposed to on the basis on the received and determined information and properties of the user terminal; and
store information on the determined amount in the memory.

3. The apparatus of claim 1, wherein different optimization levels have different levels of reduction per time unit in the amount of radiation experienced by the user of the user terminal compared to non-limited use of the user terminal.

4. The apparatus of claim 3, the at least one memory and the computer program code configured to, with the at least one processor, cause the apparatus further to:
control a display of the user terminal to display determined at least one radiation optimization level and the estimate for the amount of reduction per time unit to the user.

5. The apparatus of any preceding claim 1 to 4, the at least one memory and the computer program code configured to, with the at least one processor, cause the apparatus further to:
determine and store cumulative values related to the amount of electromagnetic radiation the user of the user terminal is exposed to;
take cumulative values into account when determining at least one radiation optimization level.

6. The apparatus of any preceding claim 1 to 4, the at least one memory and the computer program code configured to, with the at least one processor, cause the apparatus further to:
determine and store cumulative values related to the amount of electromagnetic radiation the user of the user terminal is exposed to;
control a display of the user terminal to display the cumulative values.

7. A method, comprising:
determining (200) and storing information on electromagnetic radiation a user of a user terminal is exposed to over a predetermined time period when using the user terminal, a location of the user terminal, connection status of the user terminal and time instants of determination;
**characterised by**
determining (202) at least one radiation optimization level on the basis of determined information when the predetermined time period has expired;
receiving (204) user selection of a radiation optimization level; and
controlling (206) voice call and data transfer capabilities of the user terminal on the basis of the selected radiation optimization level, wherein determining a radiation optimization level on the basis of determined information comprises:
determining locations where the user of the user terminal is exposed to electromagnetic radiation;
determining placement where the user terminal is when generating electromagnetic radiation;
determining connections types used when the user of the user terminal is exposed to electromagnetic radiation;
determining time instants when the user of the user terminal is exposed to electromagnetic radiation;
determining the body part of the user of the user terminal exposed to electromagnetic radiation;
selecting a set of the above determined items or combinations of these as a criterion to limit radiation;
selecting a set of limitations to voice call and/or data transfer capabilities of the user terminal,
determining an estimate for the amount of radiation experienced by the user of the user terminal if the selected limitations were applied when a criterion fulfils.

8. A computer program product embodied on a distribution medium readable by a computer and comprising program instructions which, when loaded into an apparatus, execute the steps:
determining (200) and storing information on electromagnetic radiation a user of a user terminal is exposed to over a predetermined time period when using the user terminal, a location of the user terminal, connection status of the user terminal and time instants of determination;
**characterised by**
determining (202) at least one radiation optimization level on the basis of determined information when the predetermined time period has expired;
receiving (206) user selection of a radiation optimization level; and
controlling (208) voice call and data transfer capabilities of the user terminal on the basis of the selected radiation optimization level, wherein determining a radiation optimization level on the basis of determined information comprises:
determining locations where the user of the user terminal is exposed to electromagnetic radiation;
determining placement where the user terminal is when generating electromagnetic radiation;
determining connections types used when the user of the user terminal is exposed to electromagnetic radiation;
determining time instants when the user of the user terminal is exposed to electromagnetic radiation;
determining the body part of the user of the user terminal exposed to electromagnetic radiation;
selecting a set of the above determined items or combinations of these as a criterion to limit radiation;
selecting a set of limitations to voice call and/or data transfer capabilities of the user terminal,
determining an estimate for the amount of radiation experienced by the user of the user terminal if the selected limitations were applied when a criterion fulfils.

## Patentansprüche

1. Vorrichtung, die umfasst:
wenigstens einen Prozessor; sowie
wenigstens einen Speicher, der Computerprogramm-Code enthält,
wobei der wenigstens eine Speicher und der Computerprogramm-Code so eingerichtet sind, dass die Vorrichtung mit dem wenigstens einen Prozessor veranlasst wird, die folgenden Schritte durchzuführen:
Bestimmen (200) und Speichern von Informationen über elektromagnetische Strahlung, der ein Benutzer eines Endgerätes über einen vorgegebenen Zeitraum bei Benutzung des Endgerätes ausgesetzt ist, eines Standorts des Endgerätes, eines Verbindungs-Status des Endgerätes sowie von Zeitpunkten der Bestimmung;
**dadurch gekennzeichnet, dass** der wenigstens eine Speicher und der Computerprogramm-Code so eingerichtet sind, dass sie mit dem wenigstens einen Prozessor die Vorrichtung des Weiteren veranlassen, die folgenden weiteren Schritte durchzuführen:
Bestimmen (202) wenigstens eines Strahlungs-Optimierungswertes auf Basis bestimmter Informationen, wenn der vorgegebene Zeitraum abgelaufen ist;
Empfangen (204) von Benutzer-Auswahl eines Strahlungs-Optimierungswertes; sowie
Steuern (206) von Sprachverbindungs- und Datenübertragungs-Kapazitäten des Endgerätes auf Basis des ausgewählten Strahlungs-Optimierungswertes, wobei
dass die Vorrichtung veranlasst wird, einen Strahlungs-Optimierungswert auf Basis bestimmter Informationen zu bestimmen, des Weiteren umfasst, dass die Vorrichtung veranlasst wird, die folgenden weiteren Schritte durchzuführen:
Bestimmen von Standorten, an denen der Benutzer des Endgerätes elektromagnetischer Strahlung ausgesetzt ist;
Bestimmen von Positionen, an denen sich das Endgerät befindet, wenn es elektromagnetische Strahlung erzeugt;
Bestimmen von Verbindungs-Arten, die zum Einsatz kommen, wenn der Benutzer des Endgerätes elektromagnetischer Strahlung ausgesetzt ist;
Bestimmen von Zeitpunkten, zu denen der Benutzer des Endgerätes elektromagnetischer Strahlung ausgesetzt ist;
Bestimmen des Körperteils des Benutzers des Endgerätes, der elektromagnetischer Strahlung ausgesetzt ist;
Auswählen einer Gruppe der oben aufgeführten Elemente oder Kombinationen derselben als ein Kriterium zum Beschränken von Strahlung;
Auswählen einer Gruppe von Einschränkungen von Sprachverbindungs- und/oder Datenübertragungs-Kapazitäten des Endgerätes,
Bestimmen eines Schätzwertes für das Maß an Strahlung, dem der Benutzer des Endgerätes ausgesetzt ist, wenn die ausgewählten Einschränkungen bei Erfüllung eines Kriteriums angewendet würden.

2. Vorrichtung nach Anspruch 1, wobei der wenigstens eine Speicher und der Computerprogramm-Code so eingerichtet sind, dass die Vorrichtung mit dem wenigstens einen Prozessor veranlasst wird, die folgenden weiteren Schritte durchzuführen:
Empfangen von Informationen über den Leistungspegel von Signalen, die wenigstens ein Funk-Sendeempfänger eines Endgerätes von einer oder mehreren externen Sendeeinrichtung/en empfangen hat;
Bestimmen von Informationen über den Leistungspegel der mit dem wenigstens einen Funk-Sendeempfänger des Endgerätes gesendeten Signale;
Bestimmen von Informationen über den Sprachverbindungs- und Datenübertragungs-Status des Endgerätes;
Empfangen von Informationen von einem oder mehreren Sensor/en des Endgerätes;
Bestimmen des Maßes elektromagnetischer Strahlung, dem der Benutzer des Endgerätes ausgesetzt ist, auf Basis der empfangenen und bestimmten Informationen sowie von Eigenschaften des Endgerätes; und
Speichern von Informationen über das bestimmte Maß in dem Speicher.

3. Vorrichtung nach Anspruch 1, wobei unterschiedliche Optimierungswerte unterschiedliche Werte der Verringerung pro Zeiteinheit hinsichtlich des Maßes an Strahlung, dem der Benutzer des Endgerätes ausgesetzt ist, gegenüber der uneingeschränkten Nutzung des Endgerätes aufweisen.

4. Vorrichtung nach Anspruch 3, wobei der wenigstens eine Speicher und der Computerprogramm-Code so eingerichtet sind,
dass mit dem wenigstens einen Prozessor die Vorrichtung veranlasst wird,
des Weiteren durchzuführen:
Steuern einer Anzeige des Endgerätes so, dass wenigstens dem Benutzer ein Strahlungs-Optimierungswert und der Schätzwert für das Maß an Verringerung pro Zeiteinheit angezeigt werden.

5. Vorrichtung nach einem der vorangehenden Ansprüche 1 bis 4, wobei der wenigstens eine Speicher und der Computerprogramm-Code so eingerichtet sind, dass mit dem wenigstens einen Prozessor die Vorrichtung veranlasst wird, die folgenden weiteren Schritte durchzuführen:
Bestimmen und Speichern kumulativer Werte bezüglich des Maßes an elektromagnetischer Strahlung, dem der Benutzer des Endgerätes ausgesetzt ist;
Berücksichtigen kumulativer Werte beim Bestimmen wenigstens eines Strahlungs-Optimierungswertes.

6. Vorrichtung nach einem der vorangehenden Ansprüche 1 bis 4, wobei der wenigstens eine Speicher und der Computerprogramm-Code so eingerichtet sind, dass mit dem wenigstens einen Prozessor die Vorrichtung veranlasst wird, die folgenden weiteren Schritte durchzuführen:
Bestimmen und Speichern kumulativer Werte bezüglich des Maßes elektromagnetischer Strahlung, dem der Benutzer des Endgerätes ausgesetzt ist;
Steuern einer Anzeige des Endgerätes so, dass sie die kumulativen Werte anzeigt.

7. Verfahren, das umfasst:
Bestimmen (200) und Speichern von Informationen über elektromagnetische Strahlung, der ein Benutzer eines Endgerätes über einen vorgegebenen Zeitraum bei Benutzung des Endgerätes ausgesetzt ist,
eines Standorts des Endgerätes,
eines Verbindungs-Status des Endgerätes sowie von Zeitpunkten der Bestimmung;
**gekennzeichnet durch**
Bestimmen (202) wenigstens eines Strahlungs-Optimierungswertes auf Basis bestimmter Informationen, wenn der vorgegebene Zeitraum abgelaufen ist;
Empfangen (204) von Benutzer-Auswahl eines Strahlungs-Optimierungswertes; sowie
Steuern (206) von Sprachverbindungs- und Datenübertragungs-Kapazitäten des Endgerätes auf Basis des ausgewählten Strahlungs-Optimierungswertes, wobei Bestimmen eines Strahlungs-Optimierungswertes auf Basis bestimmter Informationen umfasst:
Bestimmen von Standorten, an denen der Benutzer des Endgerätes elektromagnetischer Strahlung ausgesetzt ist;
Bestimmen von Positionen, an denen sich das Endgerät befindet, wenn es elektromagnetische Strahlung erzeugt;
Bestimmen von Verbindungs-Arten, die zum Einsatz kommen, wenn der Benutzer des Endgerätes elektromagnetischer Strahlung ausgesetzt ist;
Bestimmen von Zeitpunkten, zu denen der Benutzer des Endgerätes elektromagnetischer Strahlung ausgesetzt ist;
Bestimmen des Körperteils des Benutzers des Endgerätes, der elektromagnetischer Strahlung ausgesetzt ist;
Auswählen einer Gruppe der oben aufgeführten Elemente oder Kombinationen derselben als ein Kriterium zum Beschränken von Strahlung;
Auswählen einer Gruppe von Einschränkungen von Sprachverbindungs- und/oder Datenübertragungs-Kapazitäten des Endgerätes,
Bestimmen eines Schätzwertes für das Maß an Strahlung, dem der Benutzer des Endgerätes ausgesetzt ist, wenn die ausgewählten Einschränkungen bei Erfüllung eines Kriteriums angewendet würden.

8. Computerprogramm-Erzeugnis, das auf einem Verteilungs-Medium ausgeführt ist, das von einem Computer gelesen werden kann und Programm-Befehle umfasst, auf die hin beim Laden in eine Vorrichtung die folgenden Schritte ausgeführt werden:
Bestimmen (200) und Speichern von Informationen über elektromagnetische Strahlung, der ein Benutzer eines Endgerätes über einen vorgegebenen Zeitraum bei Benutzung des Endgerätes ausgesetzt ist,
eines Standorts des Endgerätes,
eines Verbindungs-Status des Endgerätes sowie von Zeitpunkten der Bestimmung;
**gekennzeichnet durch**
Bestimmen (202) wenigstens eines Strahlungs-Optimierungswertes auf Basis bestimmter Informationen, wenn der vorgegebene Zeitraum abgelaufen ist;
Empfangen (206) von Benutzer-Auswahl eines Strahlungs-Optimierungswertes; sowie
Steuern (208) von Sprachverbindungs- und Datenübertragungs-Kapazitäten des Endgerätes auf Basis des ausgewählten Strahlungs-Optimierungswertes, wobei Bestimmen eines Strahlungs-Optimierungswertes auf Basis bestimmter Informationen umfasst:
Bestimmen von Standorten, an denen der Benutzer des Endgerätes elektromagnetischer Strahlung ausgesetzt ist;
Bestimmen von Positionen, an denen sich das Endgerät befindet, wenn es elektromagnetische Strahlung erzeugt;
Bestimmen von Verbindungs-Arten, die zum Einsatz kommen, wenn der Benutzer des Endgerätes elektromagnetischer Strahlung ausgesetzt ist;
Bestimmen von Zeitpunkten, zu denen der Benutzer des Endgerätes elektromagnetischer Strahlung ausgesetzt ist;
Bestimmen des Körperteils des Benutzers des Endgerätes, der elektromagnetischer Strahlung ausgesetzt ist;
Auswählen einer Gruppe der oben aufgeführten Elemente oder Kombinationen derselben als ein Kriterium zum Beschränken von Strahlung;
Auswählen einer Gruppe von Einschränkungen von Sprachverbindungs- und/oder Datenübertragungs-Kapazitäten des Endgerätes,
Bestimmen eines Schätzwertes für das Maß an Strahlung, dem der Benutzer des Endgerätes ausgesetzt ist, wenn die ausgewählten Einschränkungen bei Erfüllung eines Kriteriums angewendet würden.

## Revendications

1. Appareil comprenant :
au moins un processeur ; et
au moins une mémoire comprenant un code de programme informatique,
la au moins une mémoire et le code de programme informatique étant configurés pour,
avec le au moins un processeur, amener l'appareil au moins à :
déterminer (200) et stocker des informations sur un rayonnement électromagnétique auquel un utilisateur d'un terminal utilisateur est exposé pendant une période de temps prédéterminée lors de l'utilisation du terminal utilisateur, un emplacement du terminal utilisateur, un état de connexion du terminal utilisateur et des instants de détermination ;
**caractérisé en ce que** la au moins une mémoire et le code de programme informatique sont configurés pour, avec le au moins un processeur, amener l'appareil à en outre :
déterminer (202) au moins un niveau d'optimisation de rayonnement sur la base d'informations déterminées lorsque la période de temps prédéterminée a expiré ;
recevoir (204) une sélection par l'utilisateur d'un niveau d'optimisation de rayonnement ; et
commander (206) des capacités d'appel vocal et de transfert de données du terminal utilisateur sur la base du niveau d'optimisation de rayonnement sélectionné, dans lequel l'appareil est amené à déterminer un niveau d'optimisation de rayonnement sur la base d'informations déterminées, comprenant en outre d'amener l'appareil à en outre :
déterminer des emplacements où l'utilisateur du terminal utilisateur est exposé à un rayonnement électromagnétique ;
déterminer un positionnement où le terminal utilisateur se trouve lors de la génération d'un rayonnement électromagnétique ;
déterminer des types de connexions utilisés lorsque l'utilisateur du terminal utilisateur est exposé à un rayonnement électromagnétique ;
déterminer des instants lorsque l'utilisateur du terminal utilisateur est exposé à un rayonnement électromagnétique ;
déterminer la partie du corps de l'utilisateur du terminal utilisateur exposée à un rayonnement électromagnétique ;
sélectionner un ensemble des éléments déterminés ci-dessus ou des combinaisons de ceux-ci en tant que critère pour limiter un rayonnement ;
sélectionner un ensemble de limitations concernant des capacités d'appel vocal et/ou de transfert de données du terminal utilisateur,
déterminer une estimation de la quantité de rayonnement subie par l'utilisateur du terminal utilisateur si les limitations sélectionnées étaient appliquées lorsqu'un critère est satisfait.

2. Appareil selon la revendication 1, la au moins une mémoire et le code de programme informatique étant configurés pour, avec le au moins un processeur, amener l'appareil à en outre :
recevoir des informations sur le niveau de puissance de signaux qu'au moins un émetteur-récepteur radio d'un terminal utilisateur a reçu depuis un ou plusieurs émetteurs externes ;
déterminer des informations sur le niveau de puissance des signaux transmis par le au moins un émetteur-récepteur radio du terminal utilisateur ;
déterminer des informations sur l'état de connexion d'appel et de transfert de données du terminal utilisateur :
recevoir des informations d'un ou plusieurs capteurs du terminal utilisateur ;
déterminer la quantité de rayonnement électromagnétique à laquelle l'utilisateur du terminal utilisateur est exposé sur la base des informations et propriétés reçues et
déterminées du terminal utilisateur ; et
stocker des informations sur la quantité déterminée dans la mémoire.

3. Appareil selon la revendication 1, dans lequel différents niveaux d'optimisation ont des niveaux différents de réduction par unité de temps de la quantité de rayonnement subie par l'utilisateur du terminal utilisateur par comparaison à une utilisation non limitée du terminal utilisateur.

4. Appareil selon la revendication 3, la au moins une mémoire et le code de programme informatique étant configurés pour, avec le au moins un processeur, amener l'appareil à en outre :
commander un affichage du terminal utilisateur pour afficher au moins un niveau d'optimisation de rayonnement déterminé et l'estimation de la quantité de réduction par unité de temps à l'utilisateur.

5. Appareil selon l'une quelconque des revendications précédentes 1 à 4, la au moins une mémoire et le code de programme informatique étant configurés pour, avec le au moins un processeur, amener l'appareil à en outre :
déterminer et stocker des valeurs cumulées liées à la quantité de rayonnement électromagnétique à laquelle l'utilisateur du terminal utilisateur est exposé ;
prendre en compte les valeurs cumulées lors de la détermination d'au moins un niveau d'optimisation de rayonnement.

6. Appareil selon l'une quelconque des revendications précédentes 1 à 4, la au moins une mémoire et le code de programme informatique étant configurés pour, avec le au moins un processeur, amener l'appareil à en outre :
déterminer et stocker des valeurs cumulées liées à la quantité de rayonnement électromagnétique à laquelle l'utilisateur du terminal utilisateur est exposé ;
commander un affichage du terminal utilisateur pour afficher les valeurs cumulées.

7. Procédé comprenant de :
déterminer (200) et stocker des informations sur un rayonnement électromagnétique auquel un utilisateur d'un terminal utilisateur est exposé sur une période de temps prédéterminée lors de l'utilisation du terminal utilisateur, un emplacement du terminal utilisateur, un état de connexion du terminal utilisateur et des instants de détermination ; **caractérisé par** les étapes consistant à
déterminer (202) au moins un niveau d'optimisation de rayonnement sur la base d'informations déterminées lorsque la période de temps prédéterminée a expiré ;
recevoir (204) une sélection par l'utilisateur d'un niveau d'optimisation de rayonnement ; et
commander (206) des capacités d'appel vocal et de transfert de données du terminal utilisateur sur la base du niveau d'optimisation de rayonnement sélectionné, dans lequel la détermination d'un niveau d'optimisation de rayonnement sur la base d'informations déterminées comprend de :
déterminer des emplacements où l'utilisateur du terminal utilisateur est exposé à un rayonnement électromagnétique ;
déterminer un positionnement où le terminal utilisateur se trouve lors de la génération d'un rayonnement électromagnétique ;
déterminer des types de connexions utilisés lorsque l'utilisateur du terminal utilisateur est exposé à un rayonnement électromagnétique ;
déterminer des instants lorsque l'utilisateur du terminal utilisateur est exposé à un rayonnement électromagnétique ;
déterminer la partie du corps de l'utilisateur du terminal utilisateur exposée à un rayonnement électromagnétique ;
sélectionner un ensemble des éléments déterminés ci-dessus ou des combinaisons de ceux-ci en tant que critère pour limiter un rayonnement ;
sélectionner un ensemble de limitations concernant des capacités d'appel vocal et/ou de transfert de données du terminal utilisateur,
déterminer une estimation de la quantité de rayonnement subie par l'utilisateur du terminal utilisateur si les limitations sélectionnées étaient appliquées lorsqu'un critère est satisfait.

8. Produit programme informatique incorporé sur un support de distribution lisible par un ordinateur et comprenant des instructions de programme qui, lorsqu'elles sont chargées dans un appareil, exécutent les étapes consistant à :
déterminer (200) et stocker des informations sur un rayonnement électromagnétique auquel un utilisateur d'un terminal utilisateur est exposé sur une période de temps prédéterminée lors de l'utilisation du terminal utilisateur, un emplacement du terminal utilisateur, un état de connexion du terminal utilisateur et des instants de détermination ; **caractérisé par** les étapes consistant à
déterminer (202) au moins un niveau d'optimisation de rayonnement sur la base d'informations déterminées lorsque la période de temps prédéterminée a expiré ;
recevoir (206) une sélection par l'utilisateur d'un niveau d'optimisation de rayonnement ; et
commander (208) des capacités d'appel vocal et de transfert de données du terminal utilisateur sur la base du niveau d'optimisation de rayonnement sélectionné, dans lequel la détermination d'un niveau d'optimisation de rayonnement sur la base d'informations déterminées comprend de :
déterminer des emplacements où l'utilisateur du terminal utilisateur est exposé à un rayonnement électromagnétique ;
déterminer un positionnement où le terminal utilisateur se trouve lors de la génération d'un rayonnement électromagnétique ;
déterminer des types de connexions utilisés lorsque l'utilisateur du terminal utilisateur est exposé à un rayonnement électromagnétique ;
déterminer des instants lorsque l'utilisateur du terminal utilisateur est exposé à un rayonnement électromagnétique ;
déterminer la partie du corps de l'utilisateur du terminal utilisateur exposée à un rayonnement électromagnétique ;
sélectionner un ensemble des éléments déterminés ci-dessus ou des combinaisons de ceux-ci en tant que critère pour limiter un rayonnement ;
sélectionner un ensemble de limitations concernant des capacités d'appel vocal et/ou de transfert de données du terminal utilisateur,
déterminer une estimation de la quantité de rayonnement subie par l'utilisateur du terminal utilisateur si les limitations sélectionnées étaient appliquées lorsqu'un critère est satisfait.
